# EUROPEAN PATENT APPLICATION

(11) **EP 4 790 548 A1**
(43) Date of publication of application: **12.08.2026**
(21) Application number: 26157056.8
(22) Date of filing: 06.02.2026
(51) Int. Cl.: G06F 8/36, G06F 8/51, G06F 8/71, G06F 9/448, G06F 9/54, G06F 8/52, G06F 8/70, G06F 9/445

(54) **AEROSPACE LIFECYCLE MANAGEMENT SERVICE-ORIENTED ARCHITECTURE (SOA) SERVER**

(30) Priority: 11.02.2025 IN 202511011390; 01.08.2025 US 202519288034
(71) Applicant: General Electric Company, Cincinnati, Ohio 45215 (US)
(72) Inventor: PRASHANTH, Giri, 560066 Bengaluru (IN)
(74) Representative: Openshaw & Co.

(57) **Abstract**

An aerospace lifecycle management service-oriented architecture (SOA) server (200) includes one or more processors (202); and one or more non-transitory computer-readable media (204) that collectively store: a process module (208) that, when executed, provides a service to a client device (102) upon receipt of a request from the client device (102); a translation module (210) that, when executed, allows the request to be executed by the process module (208); and instructions that, when executed by the one or more processors (202), configure the SOA server (200) to perform operations, the operations comprising: receiving the request from the client device (102), the request associated with the service to be provided to the client device (102); implementing the translation module (210) to modify the request such that the request can be processed by the process module (208); and after modifying the request, implementing the process module (208) to provide the service to the client device (102).

## Description

### PRIORITY INFORMATION

The present application claims priority to Indian Patent Application Serial Number 202511011390 filed on February 11, 2025.

### FIELD

The present disclosure relates to service-oriented architecture (SOA) servers and, more particularly, aerospace lifecycle management SOA servers.

### BACKGROUND

Service-oriented architecture (SOA) is a method of software development used in certain computing systems functioning in a client-server relationship. For example, SOA is commonly used in computing systems and/or servers used for product lifecycle management (PLM), such as those used in the aerospace industry. While such systems and/or servers work well, further improvements would be useful in the art.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of one embodiment of an aerospace lifecycle management service-oriented architecture (SOA) server system in accordance with aspects of the present disclosure;
FIG. 2 is a schematic view of a particular implementation of the aerospace lifecycle management SOA server system shown in FIG. 1;
FIG. 3 is a flow diagram illustrating one embodiment of control logic for operating an aerospace lifecycle management SOA server in accordance with aspects of the present disclosure; and
FIG. 4 is a flow diagram illustrating one embodiment of a method for operating an aerospace lifecycle management SOA server in accordance with aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the terms "first," "second," and "third" may be used interchangeably to distinguish one component from another and are not intended to signify the location or importance of the individual components.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

In general, the present subject matter is directed to an aerospace lifecycle management service-oriented architecture (SOA) server and associated systems and methods for replacing traditional server exits in conventional aerospace lifecycle management servers with a more flexible and scalable SOA-based approach. Specifically, in several embodiments, the aerospace lifecycle management SOA server includes one or more processors and one or more one or more non-transitory computer-readable media. The non-transitory computer-readable media, in turn, collectively store a process module that, when executed, provides a service to a client device upon receipt of a request from the client. For example, in some embodiments, the process module may be a dynamic link library (.dll) file or a shared object (.so) file. Furthermore, the non-transitory computer-readable media collectively store a translation module that, when executed, allows the request to be executed by the process module. As such, the process module is generally agnostic to the process module. In some embodiments, the translation module may be a dynamic link library (.dll) file or a shared object (.so) file. Additionally, the non-transitory computer-readable media collectively store instructions that, when executed by the processor(s), configure the SOA server to perform operations. The operations, in turn, include receiving the request from the client device, with the request associated with the service to be provided to the client device. Moreover, after receiving the request, the operations include implementing the translation module to modify the request such that the request can be processed by the process module. In addition, the operations include implementing the process module to provide the service to the client device.

In some embodiments, the aerospace lifecycle management SOA server may be used for product lifecycle management (PLM) for aerospace applications. For example, in such embodiments, the request received by the SOA may be a request for product design data and/or product manufacturing data (e.g., gas turbine engine product design data and/or gas turbine engine product manufacturing data). Upon receipt of this request, the SOA server may implement the translation module. The translation module, in turn, modifies or otherwise translates the request into a form that can be processed by the process module. Thereafter, the process module can determine whether the client device (e.g., a computer or log-in associated with an engineer in involved in the design of a gas turbine engine) is authorized to access the requested data and, if so, can retrieve the requested data from a database associated with the SOA server.

The translation module improves the operation of the aerospace lifecycle management SOA server. More specifically, in many conventional aerospace lifecycle management SOA servers, there are numerous (e.g., hundreds) process modules. When changes are made to the aerospace lifecycle management SOA server and/or associated components, it can be necessary to rewrite all of the process modules to maintain the operability of such process modules. However, in the presently disclosed aerospace lifecycle management SOA server, the translation module eliminates these issues. Specifically, the translation module is an agnostic or otherwise generic dynamic link library file (.dll) or a shared object (.so) file that allows the previously written process modules to be reused after changes to the SOA server or any associated components or software are made. That is, the translation module modifies the request from the client device in a manner that can be processed by the process module. Thus, with the presently disclosed aerospace lifecycle management SOA server, changes can be made to the aerospace lifecycle management SOA server and/or any associated components or software without the need to rewrite all of the process modules.

As such, the present subject matter can be used across various business use cases in the lifecycle management of aerospace applications, such as standalone SOA clients, RAC (rich client), and/or AWC (active workspace clients). Moreover, as described above, the present subject matter provides a comprehensive framework for creating, deploying, and managing custom SOA services, ensuring seamless integration and operation within existing IT environments for aerospace lifecycle management. Specifically, traditional server exits often require extensive customization and maintenance, leading to increased complexity and reduced flexibility. However, as described above, the present subject matter provides a more adaptable and scalable solution, which allows for the dynamic creation and deployment of custom services. Thus, the present subject matter provides additional improvements over traditional server exits by providing a robust framework for implementing SOA services, enhancing system performance and maintainability.

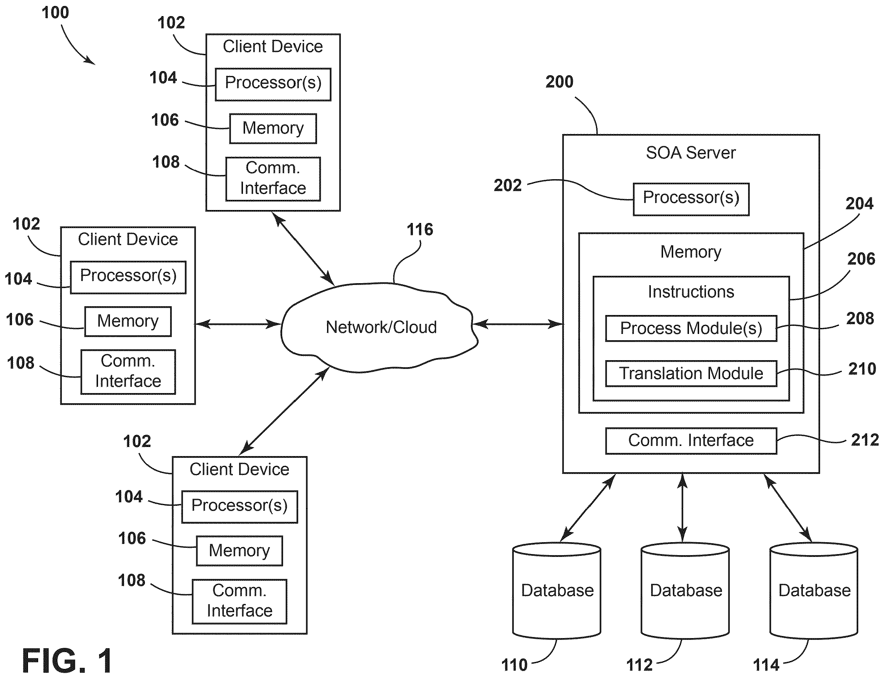

Referring now to the drawings, wherein identical numerals indicate the same elements throughout the figures, FIG. 1 is a schematic view of one embodiment of an aerospace lifecycle management service-oriented architecture (SOA) server system 100 in accordance with aspects of the present disclosure.

As shown, the aerospace lifecycle management SOA server system 100 includes one or more client devices 102. In general, and as will be described below, the client device(s) 102 is configured to request and receive a service from a SOA server 200. For example, in some embodiments, the client device(s) 102 may request and receive aerospace product lifecycle management (PLM) data, such as product design data and/or product manufacturing data. In one example, the client device(s) 102 may request the bypass ratio for a gas turbine engine being designed. Thus, a PLM software may be implemented on or in association with the SOA server system 100. An example of a PLM software is Teamcenter^{®} PLM software from Siemens Industry Software Inc.

In several embodiments, each client device 102 may correspond to any suitable processor-based device(s), such as a computing device or any combination of computing devices. For example, each client device 102 may be configured as a desktop computer, a laptop, a tablet, a Smartphone, or the like. Thus, as shown in FIG. 1, each client may generally include one or more processor(s) 104 and associated memory devices 106 configured to perform a variety of computer-implemented functions (e.g., performing the methods, steps, algorithms, calculations, and/or the like). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 106 may generally include memory element(s) including, but not limited to, computer-readable medium (e.g., random access memory (RAM)), computer-readable non-volatile medium (e.g., a flash memory), a floppy disk, a compact disc-read only memory (CD-ROM), a magneto-optical disk (MOD), a digital versatile disc (DVD) and/or other suitable memory elements. Such memory 106 may generally be configured to store information accessible to the processor(s) 104, including data that can be retrieved, manipulated, created, and/or stored by the processor(s) 104 and instructions that can be executed by the processor(s) 104.

Moreover, the client device(s) 102 may be configured to operate as any suitable type of client. For example, in some embodiments, the client device(s) 102 may operate as rich application clients (RACs). In other embodiments, the client device(s) 102 may operate as active workspace clients (AWCs).

Moreover, as shown in FIG. 1, the client device(s) 102 may also include a communications interface 108 to allow the client device(s) 102 to communicate with any of the various other system components described herein. For instance, one or more communicative links or interfaces may be provided between the communications interface 108 and the other components of the system 100 to allow data to be transmitted between the client device(s) 102 and the other components of the system 100.

In the illustrated embodiment, the aerospace lifecycle management SOA server system 100 includes three client devices 102 for purposes of simplicity. However, in alternative embodiments, the aerospace lifecycle management SOA server system 100 may include any suitable number of client devices 102. For example, in many applications, the aerospace lifecycle management SOA server system 100 may include hundreds or even thousands of client devices 102.

Furthermore, the aerospace lifecycle management SOA server system 100 includes the SOA server 200. In general, the SOA server 200 is configured to receive requests for services from the client device(s) 102 and provide such services to the client device(s) 102. For example, in some embodiments, the SOA server 200 may receive a request product lifecycle management (PLM) data, such as product design data and/or product manufacturing data, from the client device(s) 102. In one example, the SOA server 200 may receive a request from the client device(s) 102 for the bypass ratio for a gas turbine engine being designed. Thereafter, the SOA server 200 may retrieve the requested data and provide such data to the client device(s) 102 as requested. For example, in one implementation, the client device 102 associated with a particular engineer may request the bypass ratio of a gas turbine engine being designed. If client device 102 is authorized to access this information, the SOA server 200 will retrieve the requested bypass ration and provide such data to the client device(s) 102 as requested. If client device 102 is not authorized to access this information, the SOA server 200 will not retrieve the bypass ration.

In general, the SOA server 200 may correspond to any suitable processor-based device(s), such as a computing device or any combination of computing devices, configured to operate as described herein. Thus, as shown in FIG. 1, the SOA server 200 may generally include one or more processor(s) 202 and one or more non-transitory computer-readable media 204 ("memory 204") configured to perform a variety of computer-implemented functions (e.g., performing the methods, steps, algorithms, calculations and the like disclosed herein). Such memory 204 may generally be configured to store information accessible to the processor(s) 202, including instructions 206 that can be executed by the processor(s) 202.

Furthermore, as shown in FIG. 1, the instructions 206 stored within the memory 204 of the SOA server 200 may also be executed by the processor(s) 202 to implement one or more process modules 208. Specifically, each process module 208 can, when executed, provide a service to the client device(s) 102 upon receipt of a request from such client device(s) 102. In this respect, each process module may be a dynamic link library (.dll) file (e.g., in a Windows-based system) or a shared object (.so) file (e.g., in a Linux- or Unix-based system) suitable to perform the appropriate service. For example, as will be described below, the service may be determining whether the client device can access a database, retrieving data from a database associated with the request, and/or determining from which database of a plurality of databases to retrieve data associated with the request.

Additionally, as shown in FIG. 1, the instructions 206 stored within the memory 204 of the SOA server 200 may also be executed by the processor(s) 202 to implement a translation module 210. Specifically, the translation module 210, when executed, allows the request(s) from the client device(s) 102 to be executed by the appropriate process module 208. In this respect, the translation module 210 may be agnostic or otherwise generic to the process module(s) 208. Thus, the translation module 210 allows the process module(s) 208 to be reused after changes to the SOA server 200 or any associated components or software is made. That is, the translation module 210 modifies the request(s) from the client device(s) 102 in a manner that can be processed by the process module(s) 208. As such, changes can be made to the SOA server 200 and/or any associated components or software without the need to rewrite all of the process module(s) 208.

In some embodiments, the translation module 210 is coarse grained. More specifically, the translation module 210 allows for implementation a generic or agnostic Service-Oriented Architecture (SOA) to facilitate coarse-grained integration by replacing traditional RAC server exits with a more modular and scalable approach. This involves several key steps : 1). BMIDE Configuration: Initiate a BMIDE project, create a service library, and define custom SOA services, data structures, and operations. Generate service artifacts and include necessary binaries and header files from Eclipse as dependencies. Edit auto-generated files to call a base register function and build the project to produce .dll or .so files. 2). Eclipse Configuration: Create new header and cpp files, define a parent class (Example: GEA9CmdCustomService) with input and output structures, and implement setters and getters. Develop child classes for each server exit function, inheriting the input and output structures by default. Define methods to implement server exit code and modify the base register function to instantiate the respective class and call the function based on the service name provided in the input structure. 3). Deployment: Build the project to generate .dll and .lib files, which are then copied to the appropriate directories in the Teamcenter environment. The custom SOA service is called from the client by copying the necessary jar files into the Eclipse classpath and dependencies. The client uses the custom SOA operation to call specific services by providing the service name and other required values in the input structure. Thus, the translation module 210 ensures a structured and efficient way to manage complex interactions and data exchanges between different components, supporting large-scale, coarse-grained integration.

The translation module 210 may have any suitable structure that allows the translation module 210 to function as described herein. For example, each process module may be a dynamic link library (.dll) file (e.g., in a Windows-based system) or a shared object (.so) file (e.g., in a Linux- or Unix-based system) suitable to perform the appropriate service.

Additionally, the translation module 210 may be a file of any suitable computing language. For example, in some embodiments, the translation module 210 may be one or more c file(s), cpp file(s), and/or a dot net file(s).

Moreover, the translation module 210 may be configured or otherwise written in any suitable development environment. For example, in some embodiments, the translation module is configured in a business modeler integrated development environment (BMIDE).

In addition, the aerospace lifecycle management SOA server system 100 includes one or more databases 110, 112, 114. In general, the database(s) 110, 112, 114 store data that can be retrieved when the processor(s) 202 execute the process module(s) 208 stored within its memory 204. In this respect, the SOA server 200 may provide such data from the database(s) 110, 112, 114 to the client device(s) 102 as the service(s) requested by the client device(s) 102.

Additionally, the SOA server 200 may also include a communications interface 212 to allow the SOA server 200 to communicate with any of the various other system components described herein (e.g., the client device(s)). For instance, one or more communicative links or interfaces may be provided between the communications interface 212 and the other components of the system 100 to allow data to be transmitted between the SOA server 200 and the other components of the system 100.

In several embodiments, the databases 110, 112, 114 may store product lifecycle management data, such as product design data or product manufacturing data. Specifically, in some embodiments, the databases 110, 112, 114 may store gas turbine engine design data and/or gas turbine engine manufacturing data. For example, in one embodiment, the database 110 may store design and/or manufacturing data associated with a first gas turbine engine design or model, the database 112 may store design and/or manufacturing data associated with a second gas turbine engine design or model, and the database 114 may store design and/or manufacturing data associated with a third gas turbine engine design or model.

In the illustrated embodiment, the aerospace lifecycle management SOA server system 100 includes three databases 110, 112, 114 for purposes of simplicity. However, in alternative embodiments, the SOA server system 100 may include any suitable number of databases. For example, in many applications, the SOA server system 100 may include many more databases.

Furthermore, as shown in FIG. 1, the client device(s) 102 and the SOA server 200 may be communicatively coupled to each other via a network/cloud 116 to provide data and/or other information (e.g., requests and services) therebetween through respective communicative interfaces 108 and 212. The network/cloud 116 represents one or more systems by which the client device(s) 102 and the SOA server 200 may communicate. The network/cloud 116 may be one or more of various wired or wireless communication mechanisms, including any desired combination of wired and/or wireless communication mechanisms and any desired network topology (or topologies when multiple communication mechanisms are utilized). Exemplary communication networks include wireless communication networks (e.g., using Bluetooth, IEEE 802.11, etc.), local area networks (LAN), and/or wide area networks (WAN), including the Internet and the Web, which may provide data communication services and/or cloud computing services. The Internet is generally a global data communications system. It is a hardware and software infrastructure that provides connectivity between computers. In contrast, the Web is generally one of the services communicated via the Internet. The Web is generally a collection of interconnected documents and other resources, linked by hyperlinks and URLs. In many technical illustrations when the precise location or interrelation of Internet resources are generally illustrated, extended networks such as the Internet are often depicted as a cloud. The verbal illustration has been formalized in the newer concept of cloud computing. The National Institute of Standards and Technology (NIST) defines cloud computing as "a model for enabling convenient, on-demand network access to a shared pool of configurable computing resources (e.g., networks, servers, storage, applications, and services) that can be rapidly provisioned and released with minimal management effort or service provider interaction." Although the Internet, the Web, and cloud computing are not the same, these terms are generally used interchangeably herein, and they may be referred to collectively as the network/cloud 116.

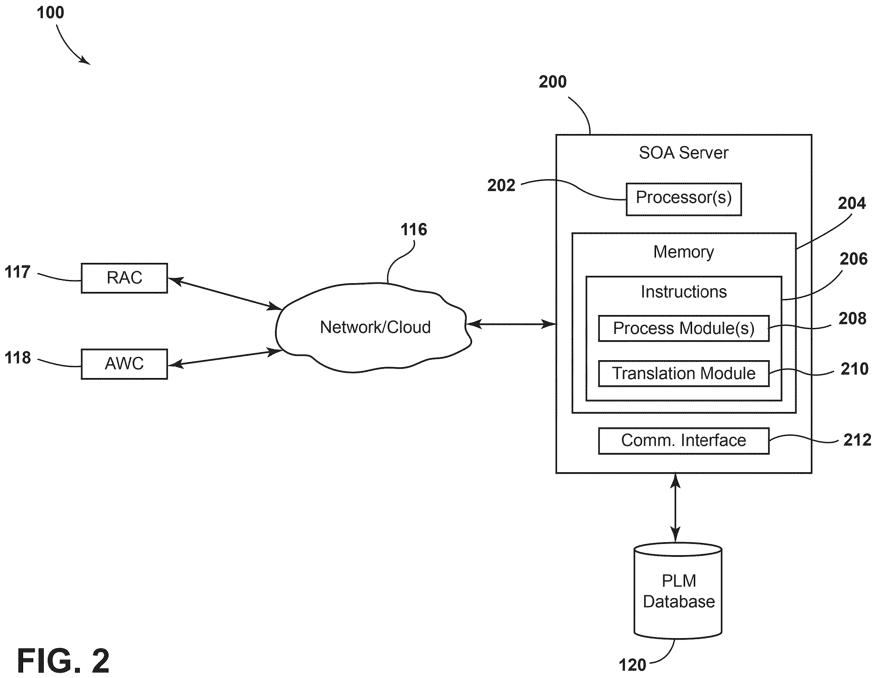

FIG. 2 is a schematic view of a particular implementation of the aerospace lifecycle management SOA server system 100 shown in FIG. 1. Specifically, FIG. 2 shows the SOA server system 100 when implemented as or part of a PLM system. In this respect, as shown, the system 100 include a RAC 117 and a AWC 118 as the client devices. In practice, the system 100 may include many RACs and/or AWCs. Additionally, as shown, the system 100 includes a PLM database 120 storing product lifecycle management data, such as product design data and/or product manufacturing data (e.g., gas turbine engine design data and/or gas turbine engine manufacturing data).

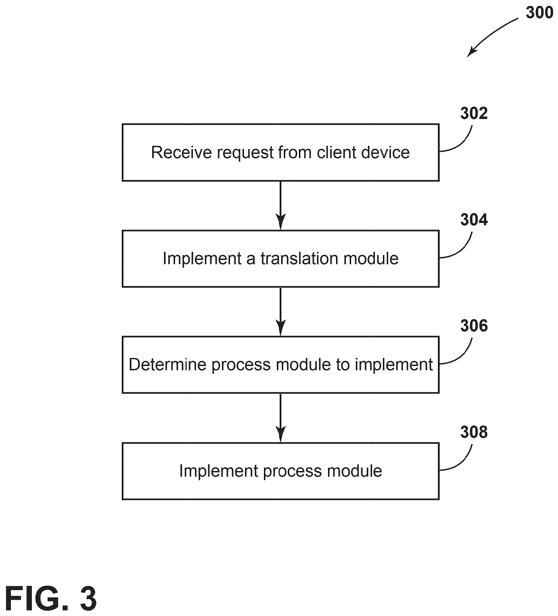

Referring now to FIG. 3, a flow diagram of one embodiment of example control logic 300 that may be executed by the aerospace lifecycle management SOA server system 100 (or any other suitable computing system) for operating an SOA server is illustrated in accordance with aspects of the present subject matter. Specifically, the control logic 300 shown in FIG. 3 is representative of steps of one embodiment of an algorithm that can be executed to operate an SOA server in a manner that allows changes to be made to the SOA server and/or any associated components or software without the need to rewrite all of the process modules stored therein. However, in other embodiments, the control logic 300 may be used in association with any other suitable system, application, and/or the like for operating an SOA server.

As shown, at (302), the control logic 300 includes receiving a request from a client device. Specifically, in several embodiments, the SOA server 200 is configured to receive a request from one of the client devices 102 (e.g., via the network/cloud 116). The request may, in turn, be indicative of or otherwise associated with one or more services to be provided to the client device 102 by the SOA server 200. For example, the service(s) may include determining whether the client device can access a database (e.g., does the client device 102 have authority to access the databases 110, 112, 114). Additionally, or alternatively, the service(s) may include retrieving data from a database associated with the request (e.g., retrieving data from one of the databases 110, 112, 114). Additionally, or alternatively, the service(s) may include determining from which database of a plurality of databases to retrieve data associated with the request (e.g., determining which of the databases 110, 112, 114 to retrieve the data from). For example, in one implementation, the SOA server 200 is configured to receive a request from one of the client devices 102 for the bypass ratio for a gas turbine engine being designed.

Furthermore, at (304), the control logic 300 includes implementing a translation module to modify the request such that the request can be processed by a process module. Specifically, in several embodiments, the SOA server 200 may be configured to execute the translation module 210 stored within its memory 204 upon receipt of the request from the client device 102 at (302). In this respect, when executing the translation module 210, the processor(s) 202 can modify or otherwise translate the request received at (302) such that the request can be processed by the process module(s) 208. Thus, as described above, the translation module 210 allows changes to be made to the SOA server 200 and/or any associated components or software without the need to rewrite all of the process modules 208 stored therein. For example, in one implementation, upon implementation of the translation module 210, the SOA server 200 is configured to modify the request from one of the client devices 102 for the bypass ratio for a gas turbine engine being designed such that the request can be processed by the appropriate process module 208.

Additionally, at (306), the control logic 300 includes determining which process module to implement based on the received request. Specifically, in several embodiments, the SOA server 200 may determine which of the process modules 208 stored within its memory 204 to implement based on the request received at (302). For example, in some embodiments, the request received at (302) may include an identifier (ID) that corresponds to a particular process module 208. Thus, based on the ID tagged or otherwise attached to the request, the SOA server 200 may determine which process module 208 to implement. For example, in one implementation, the SOA server 200 is configured to determine which of the process modules 208 stores the bypass ratio for a gas turbine engine being designed. However, in alternative embodiments, the SOA server 200 may determine which process module 208 to implement in any other suitable manner.

Moreover, after modifying the request, at (308), the control logic 300 includes implementing the process module to provide the service to the client device. Specifically, in several embodiments, the SOA server 200 may be configured to implement the process module identified at (306). In this respect, when executing the selected process module 208, the processor(s) 202 can perform the service(s) requested by the client device 102 at (302). For example, in one implementation, the SOA server 200 implement the select process module 206 to provide the bypass ratio for a gas turbine engine being designed to the client device 102 as requested.

As an example, assume the client device 102 requests the bypass ratio of a particular model of a gas turbine engine for use in its design. In such an example, the client device 102 submits a request from the bypass ratio of the gas turbine from the SOA server 200. Upon receipt of the request, the SOA server 200 implements the translation module 210, which ensures that the request can be processed by the process module(s) even if changes have been made to the SOA server 200 or any of its components or software. The SOA server 200 then determines which of the process modules 208 can be executed to retrieve the selected bypass ratio. Thereafter, when the appropriate process module 208 is executed, the SOA server 200 checks to see if the client device 102 has authorization to access the bypass ratio. If the client device 102 has the appropriate authorization, the SOA server 200 determines which database (e.g., which of the databases 110, 112, 114) the bypass ratio is stored in, retrieves the bypass ratio from the appropriate database, and provides the bypass ratio to the client device 102 as the requested service. If the client device 102 lacks the appropriate authorization, the SOA server 200 returns a message indicating the same as the service.

The bypass ratio of a gas turbine engine was simply used as an example. The control logic 300 may be used to provide any other suitable service (e.g., retrieve any other suitable data) from the SOA server 200.

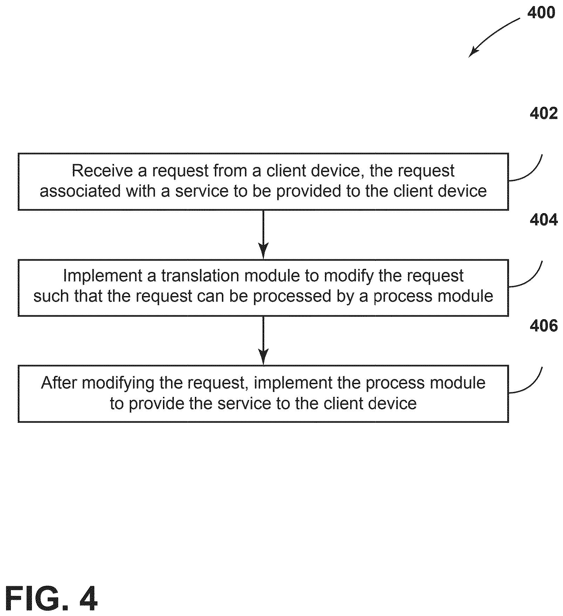

Referring now to FIG. 4, a flow diagram of one embodiment of a method 400 for operating an aerospace lifecycle management service-oriented architecture (SOA) server is illustrated in accordance with aspects of the present subject matter. In general, the method 400 will be described herein with reference to the aerospace lifecycle management SOA server system 100 described above with reference to FIGS. 1-3. However, it should be appreciated by those of ordinary skill in the art that the disclosed method 400 may generally be implemented with any SOA server system having any suitable configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 4, at (402), the method 400 includes receiving, with the SOA server, a request from a client device, the request associated with a service to be provided to the client device. For instance, as described above, the SOA server 200 may be configured to receive a request from a client device 102. The received request, in turn, is indicative of or otherwise associated with a service to be provided to the client device 102 by the SOA server 200.

Furthermore, at (404), the method 400 includes implementing, with the SOA server, a translation module to modify the request such that the request can be processed by a process module. For instance, as described above, the SOA server 200 may be configured to implement the translation module 210 stored within its memory 204 to modify the request received from the client device 102 such that the request can be processed by the process module(s) 208.

Additionally, after modifying the request, at (406), the method 400 includes implementing, with the SOA server, the process module to provide the service to the client device. For instance, as described above, the SOA server 200 may be configured to implement the process module(s) 208 to provide the requested service to the client device 102.

The translation module 208 improves the operation of the aerospace lifecycle management SOA server 100. More specifically, in many conventional aerospace lifecycle management SOA servers, there are numerous (e.g., hundreds) process modules. When changes are made to the aerospace lifecycle management SOA server and/or associated components, it can be necessary to rewrite all of the process modules to maintain the operability of such process modules. However, in the presently disclosed aerospace lifecycle management SOA server 100, the translation module 210 eliminates these issues. Specifically, the translation module 210 is an agnostic or otherwise generic dynamic link library file (.dll) or a shared object (.so) file that allows the previously written process modules to be reused after changes to the SOA server 200 or any associated components or software are made. That is, the translation module 210 modifies the request from the client device 102 in a manner that can be processed by the process module 208. Thus, with the presently disclosed aerospace lifecycle management SOA server 100, changes can be made to the aerospace lifecycle management SOA server 100 and/or any associated components or software without the need to rewrite all of the process modules 208.

Further aspects are provided by the subject matter of the following clauses:
An aerospace lifecycle management service-oriented architecture (SOA) server, comprising: one or more processors; and one or more non-transitory computer-readable media that collectively store: a process module that, when executed, provides a service to a client device upon receipt of a request from the client device; a translation module that, when executed, allows the request to be executed by the process module; and instructions that, when executed by the one or more processors, configure the SOA server to perform operations, the operations comprising: receiving the request from the client device, the request associated with the service to be provided to the client device; implementing the translation module to modify the request such that the request can be processed by the process module; and after modifying the request, implementing the process module to provide the service to the client device.

The aerospace lifecycle management SOA server of one or more clauses, wherein the translation module is agnostic to the process module.

The aerospace lifecycle management SOA server of one or more clauses, wherein the translation module is coarse-grained.

The aerospace lifecycle management SOA server of one or more clauses, wherein the translation module is a dynamic link library (.dll) file or a shared object (.so) file.

The aerospace lifecycle management SOA server of one or more clauses, wherein the translation module is a c file, a cpp file, or a dot net file.

The aerospace lifecycle management SOA server of one or more clauses, wherein the translation module is configured in a business modeler integrated development environment (BMIDE).

The aerospace lifecycle management SOA server of one or more clauses, wherein the process module is a dynamic link library (.dll) file or a shared object (.so) file.

The aerospace lifecycle management SOA server of one or more clauses, wherein the service comprises determining whether the client device can access a database.

The aerospace lifecycle management SOA server of one or more clauses, wherein the service comprises retrieving data from a database associated with the request.

The aerospace lifecycle management SOA server of one or more clauses, wherein the service comprises determining from which database of a plurality of databases to retrieve data associated with the request.

The aerospace lifecycle management SOA server of one or more clauses, wherein the database is configured to store product lifecycle management data.

The aerospace lifecycle management SOA server of one or more clauses, wherein the database is configured to store at least one of product design data or product manufacturing data.

The aerospace lifecycle management SOA server of one or more clauses, wherein the database is configured to store at least one of gas turbine engine design data or gas turbine engine manufacturing data.

The aerospace lifecycle management SOA server of one or more clauses, wherein the client device is a rich application client (RAC).

The aerospace lifecycle management SOA server of one or more clauses, wherein the client device is an active workplace client (AWC).

A method of operating a aerospace lifecycle management service-oriented architecture (SOA) server, the method comprising: receiving, with the SOA server, a request from a client device, the request associated with a service to be provided to the client device; implementing, with the SOA server, a translation module to modify the request such that the request can be processed by a process module; and after modifying the request, implementing, with the SOA server, the process module to provide the service to the client device.

The method of one or more clauses, wherein the translation module is agnostic to the process module.

The method of one or more clauses, wherein the translation module is a dynamic link library (.dll) file or a shared object (.so) file.

The method of one or more clauses, wherein the process module is a dynamic link library (.dll) file or a shared object (.so) file.

The SOA server of one or more clauses, wherein the service comprises determining whether the client device can access a database.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An aerospace lifecycle management service-oriented architecture (SOA) server (200), comprising:
one or more processors (202); and
one or more non-transitory computer-readable media (204) that collectively store:
a process module (208) that, when executed, provides a service to a client device (102) upon receipt of a request from the client device (102);
a translation module (210) that, when executed, allows the request to be executed by the process module (208); and
instructions that, when executed by the one or more processors (202), configure the SOA server (200) to perform operations, the operations comprising:
receiving the request from the client device (102), the request associated with the service to be provided to the client device (102);
implementing the translation module (210) to modify the request such that the request can be processed by the process module (208); and
after modifying the request, implementing the process module (208) to provide the service to the client device (102).

2. The aerospace lifecycle management SOA server (200) of claim 1, wherein the translation module (210) is agnostic to the process module (208).

3. The aerospace lifecycle management SOA server (200) of claim 1, wherein the translation module (210) is coarse-grained.

4. The aerospace lifecycle management SOA server (200) of claim 1, wherein the translation module (210) is a dynamic link library (.dll) file or a shared object (.so) file.

5. The aerospace lifecycle management SOA server (200) of claim 1, wherein the translation module (210) is a c file, a cpp file, or a dot net file.

6. The aerospace lifecycle management SOA server (200) of any preceding claim, wherein the translation module (210) is configured in a business modeler integrated development environment (BMIDE).

7. The aerospace lifecycle management SOA server (200) of any preceding claim, wherein the process module (208) is a dynamic link library (.dll) file or a shared object (.so) file.

8. The aerospace lifecycle management SOA server (200) of any preceding claim, wherein the service comprises determining whether the client device (102) can access a database (110, 112, 114, 120).

9. The aerospace lifecycle management SOA server (200) of any preceding claim, wherein the service comprises retrieving data from a database (110, 112, 114, 120) associated with the request.

10. The aerospace lifecycle management SOA server (200) of any preceding claim, wherein the service comprises determining from which database of a plurality of databases (110, 112, 114, 120) to retrieve data associated with the request.

11. The aerospace lifecycle management SOA server (200) of any preceding claim, wherein the database (110, 112, 114, 120) is configured to store product lifecycle management data.

12. The aerospace lifecycle management SOA server (200) of claim 11, wherein the database (110, 112, 114, 120) is configured to store at least one of product design data or product manufacturing data.

13. The aerospace lifecycle management SOA server (200) of claim 12, wherein the database (110, 112, 114, 120) is configured to store at least one of gas turbine engine design data or gas turbine engine manufacturing data.

14. The aerospace lifecycle management SOA server (200) of any preceding claim, wherein the client device (102) is a rich application client (RAC) (117).

15. The aerospace lifecycle management SOA server (200) of any preceding claim, wherein the client device (102) is an active workplace client (AWC) (118).
